# EUROPEAN PATENT APPLICATION

(11) **EP 4 711 958 A1**
(43) Date of publication of application: **18.03.2026**
(21) Application number: 24200542.9
(22) Date of filing: 16.09.2024
(51) Int. Cl.: G06F 21/43, B60L 53/65, G06F 21/44, H04W 12/06

(54) **PRIVILEGE-BASED BATTERY PACK DATA TRANSMISSION**

(71) Applicant: VOLVO TRUCK CORPORATION, 405 08 Göteborg (SE)
(72) Inventor: LILLMAA, Henri, 463 72 LÖDÖSE (SE)
(74) Representative: Ström & Gulliksson AB

(57) **Abstract**

A computer system (100; 800) for privilege-based battery pack data transmission, the computer system (100; 800) comprising processing circuitry (102; 802) configured to authenticate a portable client device (10) in response to said portable client device (10) being within an identifiable distance (d) of a battery pack (20); based on the authentication, obtain a privilege level (12) of the portable client device (10), wherein the obtained privilege level (12) indicates battery pack data (30) allowed to be transmitted from the battery pack (20) to the portable client device (10); and cause wireless transmission of said battery pack data (30) from the battery pack (20) to the portable client device (10) based on the obtained privilege level (12).

## Description

### TECHNICAL FIELD

The disclosure relates generally to battery data management. In particular aspects, the disclosure relates to privilege-based battery pack data transmission. The disclosure can be applied to heavy-duty vehicles, such as trucks, buses, and construction equipment, among other vehicle types. The disclosure can also be applied to other areas of application, such as marine vessels, industrial applications, stationary applications, among other areas of application. Although the disclosure may be described with respect to a particular vehicle, the disclosure is not restricted to any particular vehicle.

### BACKGROUND

In battery systems, battery pack data can be used to assess the condition, performance, and safety of a battery pack over time, ensuring it operates efficiently, maintains its capacity, and prevents failures or hazards, thereby extending its lifespan and reliability in various applications such as electric vehicles and renewable energy systems.

Traditional methods to obtain battery pack data, such as using the OBD2 port in vehicles or scanning QR codes, have several drawbacks. The OBD2 port method requires physical connections, making it cumbersome and time-consuming, while QR codes provide only static information and necessitate manual scanning. In factory or service settings, battery packs are often brought to designated workstations for data transfer. This process is inefficient and labor-intensive, requiring the movement of the battery packs to specific locations, which can disrupt workflows.

It is in view of the above limitations of the prior art and others that the present inventor is herein suggesting one or more improvements to the prior art.

### SUMMARY

According to a first aspect of the disclosure, there is provided a computer system for privilege-based battery pack data transmission, the computer system comprising processing circuitry configured to: authenticate a portable client device in response to said portable client device being within an identifiable distance of a battery pack; based on the authentication, obtain a privilege level of the portable client device, wherein the obtained privilege level indicates battery pack data allowed to be transmitted from the battery pack to the portable client device; and cause wireless transmission of said battery pack data from the battery pack to the portable client device based on the obtained privilege level.

The first aspect of the disclosure may seek to streamline, secure and simplify the process of managing battery pack data. A technical benefit may include an eliminated need for physical connections, an assurance that only authorized devices can access sensitive information based on their privilege level, and a simple way for allowing user access to battery data.

Optionally in some examples, including in at least one preferred example, the battery pack data comprises one or more of an active diagnostic trouble code, regulatory data, and battery status, wherein a higher privilege level of the portable client device is given access to more detailed information about the active diagnostic trouble codes and the battery statuses, and a lower privilege level of the portable client device is given access to less detailed information about the active diagnostic trouble codes and the battery statuses. A technical benefit may include enabling tiered access to various battery data based on authorization levels, enhancing security and usability.

Optionally in some examples, including in at least one preferred example, the portable client device is a handheld device configured to selectively be brought within the identifiable distance to trigger the functionality of the processing circuitry. A technical benefit may include allowing for flexible and convenient interaction with the battery pack by using a handheld device.

Optionally in some examples, including in at least one preferred example, further comprising, in response to successfully authenticating the portable client device and obtaining the privilege level, enabling transmission of additional battery pack data from one or more additional battery packs being associated with the battery pack. A technical benefit may include providing comprehensive data access across multiple battery packs, improving diagnostics and management.

Optionally in some examples, including in at least one preferred example, wherein the battery pack is arranged within a high-voltage, HV, component, the HV component comprising the computer system and a battery pack, the battery pack data relating to said battery pack of the HV component. A technical benefit may include integrating the computer system within high-voltage components, for example in an area of application such as a vehicle, ensuring live battery pack data access.

Optionally in some examples, including in at least one preferred example, wherein the battery pack is stored in a servicing location, the battery pack comprising the computer system. A technical benefit may include facilitating easy access to battery pack data in service locations, enhancing maintenance efficiency.

Optionally in some examples, including in at least one preferred example, wherein the computer system forms part of a battery management system, BMS, of the battery pack. A technical benefit may include ensuring seamless integration and coordination within the battery management system, improving overall performance and safety.

Optionally in some examples, including in at least one preferred example, wherein the portable client device is further configured to transmit one or more additional requests to the battery pack based on the obtained battery pack data and its privilege level, said additional request being a request for one or more of detailed diagnostic data, maintenance commands, firmware updates, historical performance data, and battery pack configuration settings. A technical benefit may include enabling dynamic and versatile interactions with the battery pack, allowing for comprehensive data retrieval and management operations.

Optionally in some examples, including in at least one preferred example, wherein the processing circuitry is configured to obtain the privilege level based on session-specific data of the authentication. A technical benefit may include enhancing security by dynamically assigning privilege levels based on session-specific data, ensuring appropriate access control.

According to a second aspect of the disclosure, a use of a portable client device to obtain battery pack data from a battery pack is provided, the use comprising bringing the portable client device within an identifiable distance of the battery pack, thereby causing authentication of the portable client device against the battery pack, and the battery pack to obtain a privilege level of the portable client device, wherein the privilege level indicates battery pack data allowed to be transmitted from the battery pack to the portable client device; and based on the obtained privilege level, causing the portable client device to wirelessly obtain battery pack data from the battery pack.

The second aspect of the disclosure may seek to streamline, secure and simplify the process of managing battery pack data. A technical benefit may include an eliminated need for physical connections, an assurance that only authorized devices can access sensitive information based on their privilege level, and a simple way for allowing user access to battery data.

According to a third aspect of the disclosure, a vehicle comprising the computer system of the first aspect is provided.

The third aspect of the disclosure may seek to streamline, secure and simplify the process of managing battery pack data. A technical benefit may include an eliminated need for physical connections, an assurance that only authorized devices can access sensitive information based on their privilege level, and a simple way for allowing user access to battery data.

According to a fourth aspect of the disclosure, a computer-implemented method for privilege-based battery pack data transmission is provided, the method comprising authenticating, by processing circuitry of a computer system, a portable client device in response to said portable client device being within an identifiable distance of a battery pack; based on the authentication, obtaining, by the processing circuitry, a privilege level of the portable client device, wherein the obtained privilege level indicates battery pack data allowed to be transmitted from the battery pack to the portable client device; and causing, by the processing circuitry, wireless transmission of said battery pack data from the battery pack to the portable client device based on the obtained privilege level.

The fourth aspect of the disclosure may seek to streamline, secure and simplify the process of managing battery pack data. A technical benefit may include an eliminated need for physical connections, an assurance that only authorized devices can access sensitive information based on their privilege level, and a simple way for allowing user access to battery data.

According to a fifth aspect of the disclosure, a computer program product is provided, comprising program code for performing, when executed by the processing circuitry, the method of the fourth aspect.

The fifth aspect of the disclosure may seek to enable new vehicles or other application areas and/or legacy vehicles or other legacy application areas to be conveniently configured, by software installation/update, to streamline, secure and simplify the process of managing battery pack data. A technical benefit may include an eliminated need for physical connections, an assurance that only authorized devices can access sensitive information based on their privilege level, and a simple way for allowing user access to battery data.

According to a sixth aspect of the disclosure, a non-transitory computer-readable storage medium is provided, comprising instructions, which when executed by the processing circuitry, cause the processing circuitry to perform the method of the fourth aspect.

The sixth aspect of the disclosure may seek to enable new vehicles or other application areas and/or legacy vehicles or other legacy application areas to be conveniently configured, by software installation/update, to streamline, secure and simplify the process of managing battery pack data. A technical benefit may include an eliminated need for physical connections, an assurance that only authorized devices can access sensitive information based on their privilege level, and a simple way for allowing user access to battery data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an system diagram of a heavy duty vehicle according to some examples.
**FIG. 1B** is an exemplary illustration of a servicing location for battery packs according to some examples.
**FIG. 2** is an exemplary system diagram of a high voltage, HV, component according to some examples.
**FIG. 3** is an exemplary illustration of exemplary battery data according to some examples.
**FIG. 4A** is an exemplary illustration of a portable client device outside of an identifiable distance from a battery pack.
**FIG. 4B** is an exemplary illustration of a portable client device within an identifiable distance from a battery pack.
**FIG. 5A** is an exemplary illustration of a portable client device outside of an identifiable distance from a battery pack.
**FIG. 5B** is an exemplary illustration of a portable client device within an identifiable distance from a battery pack.
**FIG. 6A** is an exemplary illustration of a portable client device outside of an identifiable distance from a battery pack.
**FIG. 6B** is an exemplary illustration of a portable client device within an identifiable distance from a battery pack.
**FIG. 7** is an flowchart diagram of a computer-implemented method for privilege-based battery pack data transmission.
**FIG. 8** is a schematic diagram of a computer system for implementing examples disclosed herein according to some examples.

### DETAILED DESCRIPTION

The detailed description set forth below provides information and examples of the disclosed technology with sufficient detail to enable those skilled in the art to practice the disclosure.

Approaches herein address the challenges associated with retrieving data from battery packs that are more efficient and user-friendly by utilizing wireless communication capabilities. When a portable client device is brought within an identifiable distance of a battery pack, an authentication process is initiated. This ensures that only authorized devices can access the battery pack data. Once authenticated, the system determines the privilege level of the portable client device, which dictates the specific data that can be transmitted. This privilege level can be based on factors such as user type or device type, allowing for customized data access suited to different needs, whether for end-users, service personnel, or factory workers.

Advantages provided by these approaches may involve a reduction in time and effort required to access battery pack data, as the wireless communication eliminates the need for cumbersome physical connections, making the process quicker and more efficient. The ability to determine privilege levels can ensure that sensitive data is only accessible to authorized users, enhancing security. Moreover, this system can advantageously be used in various environments, including vehicles, service workshops, and storage facilities, allowing for real-time data access which is crucial for timely maintenance and diagnostics. Ultimately, the overall safety and performance of the battery packs can be improved.

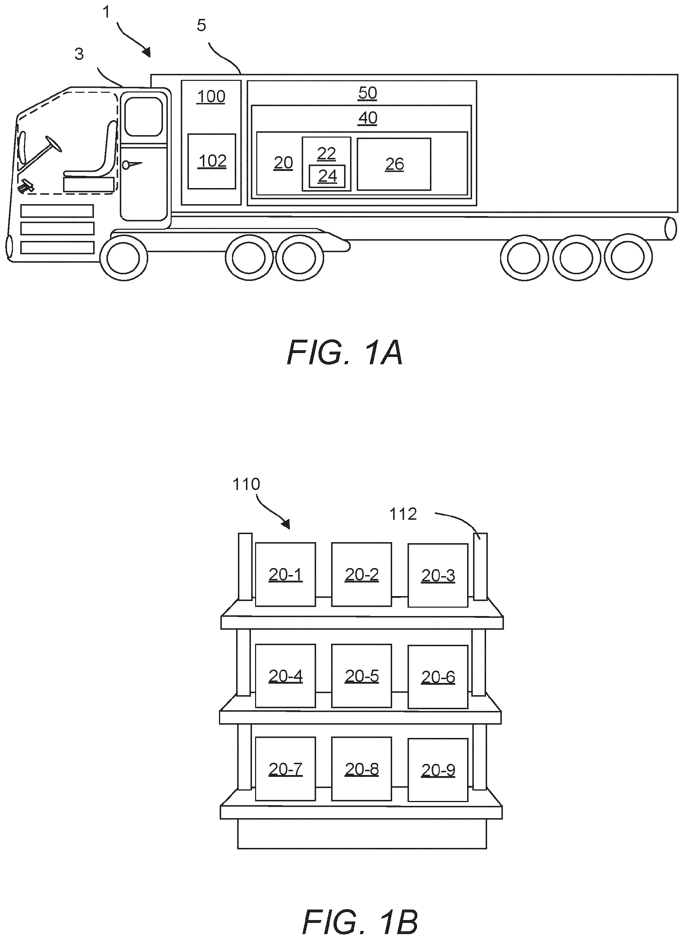

**FIG. 1A** is an exemplary schematic illustration of a vehicle 1. The vehicle 1 is illustrated as a heavy-duty vehicle, in this case a truck. The vehicle 1 is preferably an electric vehicle. In other areas of application other machines typically employing battery systems can be envisaged, such as for buses, marine vessels, construction equipment, personal vehicles, among other areas of application. The vehicle **1** comprises a tractor unit **3** which is arranged to tow a trailer unit **5.** While not explicitly shown, the vehicle **1** includes vehicle units and associated functionality as would be understood and expected by a skilled person, such as a powertrain, chassis, and various control systems.

The vehicle **1** comprises an energy storage system, ESS **50.** The ESS **50** is arranged to store electrical energy and release it as needed. The ESS **50** comprises a high-voltage, HV, component **40.** The HV component **40** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **40** is readily adaptable for other HV application areas.

The HV component **40** comprises a plurality of battery packs **20,** each battery pack **20** having one or more battery modules **22,** and each module **22** comprising battery cells **24** responsible for storing energy in chemical form. When chemical reactions occur electrical energy is harnessed for various application. The battery cells **24** are the fundamental building blocks of a battery, comprising an anode, cathode, and electrolyte. Multiple battery cells **24** are combined to create a battery module **22** which is a modular unit, one or more of which forming a battery pack **20** that delivers voltage, capacity, and power for diverse applications. The battery packs **20** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **20** are rechargeable and adapted to provide a source of electricity for an electric propulsion system (not shown). During charging, electricity from an external power source is used to replenish the energy stored in the battery packs **20,** the external power source typically being Electric Vehicle Supply Equipment (EVSE). EVSE refers to the infrastructure, commonly known as a charging station or charging point, that supplies electric energy for recharging the battery packs **20.** The stored electrical energy is then made available for the electric propulsion system or other power-consuming components, systems or subsystems of the vehicle **1.**

The HV component **40** comprises a battery management system, BMS **26.** The BMS **26** is designed to oversee and regulate the performance and safety of battery packs **20.** The BMS **26** is composed of several sub-components situated both within each battery pack **20** and within each battery module **22.** The BMS **26** can refer to the management of a single battery pack **20** or encompass multiple battery packs **20** included within the HV component **40.** When managing multiple battery packs **20,** the BMS **26** can ensure that all battery packs **20** operate harmoniously, balancing their states of charge and health to optimize the performance and longevity of the entire set.

Included in the BMS **26** for each battery pack **20** is a battery management unit (BMU). The BMU is responsible for monitoring and managing the overall condition of the battery pack **20,** including for example state of charge (SoC), state of health (SoH), and temperature. The BMU can ensure that the battery operates within safe parameters by continuously assessing various metrics and making necessary adjustments to maintain optimal performance. The BMU communicates with other components of the BMS **26** to coordinate these activities.

Also included in the BMS **26** for each battery pack **20** is a battery disconnect unit (BDU). The BDU serves as a safety mechanism that can isolate the battery pack **20** from the rest of the system in case of a fault or an emergency. The BDU is capable of disconnecting the battery pack from the HV component **40** to prevent damage or hazardous situations. The BDU can be triggered by the BMU based on the data it collects, ensuring that the system can respond swiftly to any anomalies.

Within each battery module **22** of each battery pack **20** there is also comprised a cell supervision circuit (CSC). The CSC is tasked with monitoring individual battery cells **24** within the battery module **22.** This involves measuring cell voltages, temperatures, and balancing the battery cells **24** to ensure uniform performance across the battery module **22.** By managing the battery cells **24** at this granular level, the CSC plays the role of maintaining the overall health and efficiency of the battery module **22,** which in turn can contribute to the performance of the entire battery pack **20.**

The vehicle **1** further comprises a computer system **100** having processing circuitry **102.** The processing circuitry **102** is configured for controlling a privilege-based transmission of battery pack data. The processing circuitry **102** thereby serves as the central control unit responsible for overseeing the secure and efficient transfer of data from the battery pack **20** to various client devices, such as a portable client device as will be described in more detail in this disclosure. This is conditioned by an authentication of a said portable client device in response to it being within an identifiable distance of a battery pack **20.** Once the portable client device is authenticated, the processing circuitry **102** obtains the privilege level of the device, which dictates the scope and/or type of battery pack data that is allowed to be transmitted from the battery pack **20** to the portable client device. Based on the privilege level, the processing circuitry **102** controls transmission of the battery pack data from the battery pack **20** to the portable client device. To this end, the privilege-based battery pack data transmission involves three fundamental steps: the authentication, the obtaining of the privilege level, and the transmission based thereon.

In some examples, the computer system **100** forms part of the BMS **26.** This integration means that the computer system **100,** including its processing circuitry **102,** works in conjunction with other BMS components such as the BMU, BDU and CSC. By forming part of the BMS **26,** the computer system **100** may not only controls the privilege-based transmission of battery pack data, but also, for example, collaborate with the BMU to monitor battery health, manage charging and discharging cycles, and ensure safe operation. This information (or corresponding information from the CSC or BDU) may then be incorporated in the battery pack data transmission.

While **FIG. 1A** shows a vehicle **1** including a battery pack **20,** it shall be understood that the battery pack **20** is not necessarily arranged in its application area. On the contrary, in examples of the present disclosure the battery pack **20** can be stored in a servicing location **110,** for example on a shelf **112** in said servicing location **110** as is shown in **FIG. 1B****.** The servicing location **110** can be a workshop or maintenance facility, or practically any other type of physical location where it may be desired to obtain battery pack data from a battery pack **20.** In the servicing location **110** one or more (in this case nine) battery packs **20-1,** ..., **20-9** can be accessible for convenient and efficient battery data readout.

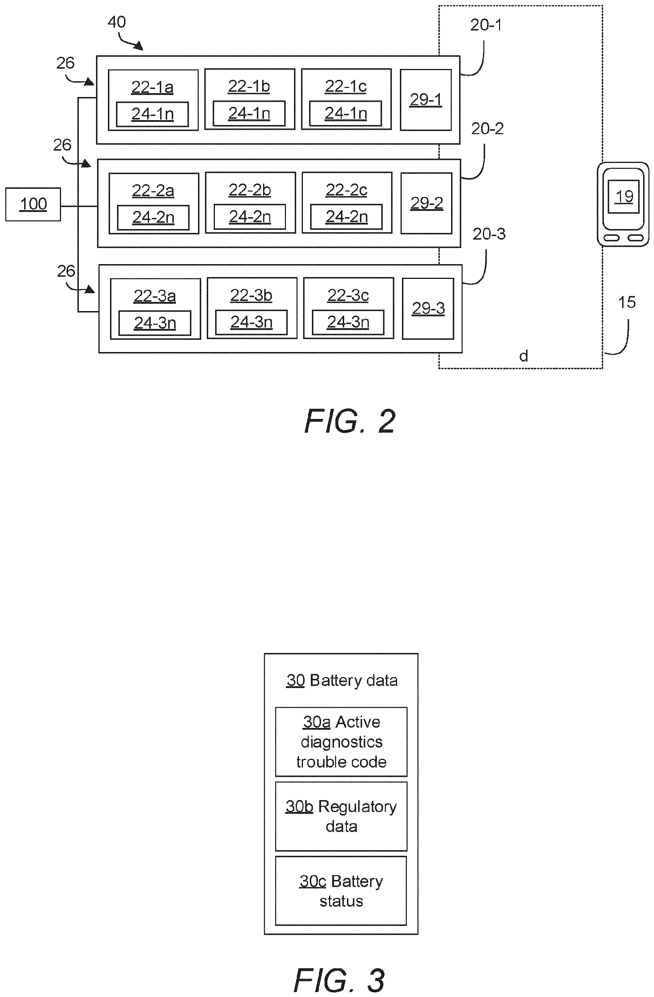

**FIG. 2** shows an exemplary HV component **40** in more detail and its connection with the computer system **100** and a portable client device **10.** It shall be understood that parts of the computer system **100,** such as parts of the processing circuitry **102,** can be integrated within the BMS **26,** as discussed above. In addition to the components that were introduced with reference to **FIG. 1****,** i.e., the packs **20,** modules **22,** cells **24** and BMS **26,** the HV component **40** of **FIG. 2** further includes wireless communication units **29.** In this particular example three battery packs **20-1, 20-2, 20-3** are shown, each battery pack involving three battery modules **22-1a, 22-1b, 22-1c, 22-2a, 22-2b, 22-2c, 22-3a, 22-3b, 22-3c,** and each battery module involving any suitable number of battery cells **24-1n, 24-2n, 24-3n.** Moreover, each battery pack involves a respective communication unit **29-1, 29-2, 29-3.** It is readily understood that this is but an exemplary arrangement and which does not pose any restrictions on the scope, as other battery configurations may include any number of packs, modules or cells.

The communication unit **29** may be a transceiver unit, i.e., an electronic device that combines both a transmitter and a receiver in a single module, enabling it to send and receive wireless signals. The transceiver unit facilitates bidirectional communication, allowing data to be transmitted to and received from another device equipped with a compatible transceiver, in this case bidirectional communication between the battery packs **20-1, 20-2, 20-3** and the portable client device **10.** The communication may be effected over a radio-frequency communication protocol **15,** for example Near Field Communication (NFC), Radio-Frequency Identification (RFID), Ultra-Wideband (UWB), WiFi, and Bluetooth. NFC units allow short-range communication between devices when they are brought into close proximity, typically within a few centimeters. RFID transceivers use electromagnetic fields to automatically identify and track tags attached to objects. UWB transceivers use a wide frequency spectrum for high-bandwidth, short-range communication, providing precise location tracking and data transfer. WiFi transceivers enable devices to connect to wireless local area networks (WLANs) and exchange data over longer distances, while Bluetooth transceivers facilitate short-range wireless communication between devices, commonly used for personal area networks (PANs).

Other communication options may be viable in other examples, such as Zigbee, LoRa, Sigfox, LTE, 5G, infrared, ultrasonic, optical (including visible light communication), acoustic, satellite communication, or proprietary wireless protocols tailored to specific applications.

Enabling wireless bidirectional communication between the units **19, 29-1, 29-2, 29-3** means that both units can send and receive data to and from each other. This communication may be used for operations such as the authentication of the portable client device **10,** the obtaining of privilege level, and the transmission of the battery pack data.

The portable client device **10** may be a handheld electronic device equipped with a wireless communication unit **19,** such as a transceiver unit, enabling it to communicate with a battery pack **20-1, 20-2, 20-3** that houses another wireless communication unit **29-1, 29-2, 29-3.** The portable client device **10** can take various forms, including smartphones, tablets, handheld diagnostic tools, or other compact, battery-powered devices designed for mobility and ease of use. The portable client device **10** comprises necessary components such that its functionality can be enabled, such as a processor, memory, display, user interface, battery, etc. The portable client device **10** runs software or applications that manage communication protocols, user authentication, data processing, and display of received data, which can be pre-installed or downloaded by the user.

The portable client device **10** communicates with a battery pack **20** by establishing a wireless connection through the transceiver units. For example, in the case of NFC, the user brings the portable client device **10** close to a battery pack **20** to initiate the communication. The communication units **19, 29** exchange signals to authenticate the portable client device **10,** determine its privilege level, and facilitate the transfer of battery pack data. The portable client device **10** can be used in various scenarios, such as a service technician diagnosing a vehicle battery, a warehouse worker checking the status of stored battery packs, or a consumer monitoring the health of a battery in their electric vehicle. The device's portability allows for flexibility and convenience, enabling users to access critical battery data in real-time and make informed decisions based on the received information.

In some examples, the portable client device **10** being a handheld device is configured to be selectively brought within an identifiable distance **d** of a battery pack **20** to trigger the functionality of the processing circuitry **102.** This configuration allows the handheld device to initiate the data transfer process by simply being in proximity to a battery pack **20,** eliminating the need for physical connections or manual data retrieval steps. The processing circuitry **102** recognizes the presence of the handheld device within the specified range and activates the necessary functions to authenticate the device, obtain its privilege level, and facilitate the secure transfer of battery pack data. This approach enhances user convenience and efficiency, particularly in environments where quick and easy access to battery information is critical.

As mentioned herein, the privilege-based battery pack data transmission involves three fundamental steps: the authentication, the obtaining of the privilege level, and the transmission based thereon. Now that necessary components of the system have been introduced, these concepts are defined in more detail according to examples hereinbelow.

The authentication involves verifying the identity and authorization of the portable client device **10** when it comes within an identifiable distance **d** of a battery pack **20.** This process ensures that only authorized devices can access or interact with data of the battery pack **20,** thereby maintaining the security and integrity of the battery management system. The identifiable distance **d** ensures that the portable client device **10** is close enough to the battery pack **20** to establish a reliable and secure communication link, appropriate for the specific application and environment.

Initially, the authentication process involves detecting the presence of the portable client device **10.** The identifiable distance **d** is typically determined by the communication protocol employed, such as NFC, Bluetooth, or WiFi. For example, NFC typically has a range of a few centimeters, while Bluetooth and WiFi can operate over several meters. Once the portable client device **10** is detected within the identifiable distance, the wireless communication units **19, 29** initiate bidirectional communication. This involves an exchange of signals to establish a connection, often referred to as a handshake. The handshake protocol involves the exchange of initial messages between the battery pack **20** and the portable client device **10** to confirm their identities. Common techniques include acknowledging (ACK) or not acknowledging (NACK) messages, ensuring both devices agree on the communication parameters. The portable client device **10** sends its authentication credentials to the battery pack **20,** which can include a unique device identifier, cryptographic keys, or certificates. The credentials are used to verify the identity of the portable client device **10.** The battery pack **20,** through the processing circuitry **102,** can verify the received credentials against a prestored database of authorized devices. This may involve cryptographic techniques such as public-private key exchange, digital signatures, or hash functions to ensure the credentials are legitimate and have not been tampered with. Upon successful verification, the authentication procedure is completed. If the verification fails, this could mean that there are issues in the connection, that the device is not authorized, that the device is not within the distance **d,** or the like.

The authentication may be carried out using known technologies, such as public-private key exchange, digital certificates, hash functions, or token-based authentication.

Based on the authentication, the processing circuitry **102** obtains the privilege level. In this disclosure, the term "obtaining" the privilege level shall be understood to include both determining the privilege level based on the authentication process and receiving the privilege level directly from the portable client device. The processing circuitry **102** can thus either internally determine the appropriate privilege level after authenticating the portable client device **10,** or accept a pre-determined privilege level provided by the portable client device **10** itself.

The privilege level may be obtained using various different techniques. In some examples, the privilege level can be obtained based on application data associated with an identification application installed on the portable client device **10.** This method can ensure that that the privilege level is tied directly to the specific application being used, providing a secure and tailored level of access. In other examples, the privilege level can be obtained based on the MAC address of the portable client device **10,** which allows the system to identify and authenticate the device based on its unique hardware identifier. Additionally, the privilege level can be determined based on the IP address or subnet from which the portable client device **10** is connecting, or a port number thereof, facilitating network-based authentication and access control. Furthermore, in some examples, the privilege level can be obtained based on session-specific data of the authentication, allowing dynamic assignment of privileges based on the current context and parameters of session(s) relating to the authentication procedure. Another approach involves obtaining the privilege level based on the type of encryption or encoding protocol used for said authentication, ensuring that more secure communication methods are granted higher access levels. The privilege level can also be determined based on a physical layer attribute of the portable client device **10,** such as signal strength or specific hardware characteristics, providing an additional layer of security and device-specific control. Each of these methods offers a unique advantage in tailoring access levels to the specific requirements and security protocols of the system.

The privilege level can ensure that only authorized personnel or devices can access sensitive or critical battery information. The privilege level may comprise a predetermined set of access rights and permissions assigned to a device or user, determining the scope and type of data that can be accessed from the battery pack. Different devices can have varying privilege levels based on their intended use, user role, and security requirements. For instance, a service technician's handheld diagnostic tool is typically assigned a higher privilege level, granting access to detailed diagnostic data, cell voltages, temperature readings, and the ability to perform maintenance tasks. This elevated access allows technicians to conduct thorough diagnostics and maintenance, which may safe and efficient operation of the battery pack **20.** Conversely, a consumer's mobile phone would generally be assigned a lower privilege level, restricting access to basic information such as the state of charge (SoC), state of health (SoH), and possibly some usage statistics. This limitation ensures that consumers receive the necessary information to monitor battery performance without exposing them to sensitive or complex data that could be misinterpreted or misused.

The privilege level may be separated into high, medium and low ranks. Higher ranks are typically assigned to service technicians or specialized diagnostic tools, allowing access to detailed and sensitive data, such as individual cell voltages, temperatures, and active diagnostic trouble codes (DTCs). Medium ranks may be assigned to maintenance personnel or intermediate diagnostic tools, providing access to aggregated data like module-level statistics and general health indicators. Lower ranks may be assigned to consumers or basic monitoring devices, restricting access to essential information such as active DTCs, state of charge (SoC), state of health (SoH), and usage statistics.

The wireless transmission of the battery pack data based on the privilege level refers to the process by which the battery pack **20** selectively transmits specific data to the portable client device **10** according to the permissions and access rights associated with the privilege level. This selective transmission ensures that different users or devices receive only the data they are authorized to access, enhancing both security and usability. Once the privilege level is obtained, the processing circuitry **102** may select the appropriate data from the battery pack **20** that aligns with the privilege level. For example, a high-privilege device may receive detailed diagnostic data, while a low-privilege device may only receive basic status information. The selected data may then be formatted and prepared for wireless transmission. This may involve data packaging, encryption, and encoding to ensure secure and efficient transmission. The formatting process can ensure that the data is compatible with the communication protocol **15** used by the communication units **19, 29.** The wireless transmission is initiated by sending the prepared data through the communication unit **29** and is directed to the communication unit **19.** Upon receiving the data, the portable client device 10 can be configured to process the incoming information, decrypting and decoding it as necessary. The portable client device **10** may then display the relevant data to the user, for example through visual or auditory interfaces.

Typically, battery pack data is retrieved by a portable client device **10** by being within the identifiable distance **d.** In some examples, however, the processing circuitry **102** may involve an additional functionality to enable the transmission of additional battery pack data from one or more additional battery packs associated with the primary battery pack. In the example of **FIG. 2****,** the battery pack **20-1** could be the primary battery pack and the other battery packs **20-2, 20-3** could be the additional battery pack referred to above. This functionality can be enabled once the portable client device **10** is successfully authenticated against the primary battery pack **20** and its privilege level **12** is obtained. In this scenario, the BMS **26** may act as a master controller, allowing the portable client device **10** to access data from multiple battery packs without needing to undergo separate authentication and privilege checking procedures for each pack. This can be useful in HV components **40** that include multiple battery packs **20** with similar properties, as it streamlines the data retrieval process and provides comprehensive information in a single operation. By reducing redundancy in the authentication process, this additional functionality may be efficient as it can provide a more holistic view of the battery status, which may be beneficial for maintenance, diagnostics, and overall battery management.

In some examples, the computer system **100** may allow the portable client device **10** to transmit one or more additional requests to the battery pack **20** based on the obtained battery pack data and the privilege level. This capability may enable the portable client device **10** to interact dynamically with the battery pack **20,** requesting specific information or actions tailored to the user's needs and permissions. For instance, once the portable client device **10** has authenticated and received initial battery pack data, it can send further requests to the battery pack **20** to gather more detailed insights or perform specific tasks. These additional requests are governed by the privilege level assigned to the portable client device **10,** ensuring that only authorized actions are performed and sensitive data is accessed appropriately. These examples may enhance the flexibility and functionality of the system, allowing for more comprehensive monitoring, diagnostics, and management of the battery pack. This can also reduce the risk of overwhelming the user with too much information, preventing confusion and frustration. For example, in some examples the initial transmission of battery pack data can include limited amount of information, and the user may request that the amount to be transmitted in a second transmission be more specific according to needs. Advantageously, the portable client device **10** is already authenticated against the battery pack **20** at this stage, so the additional transmission(s) may be more efficient.

The additional request may be a request for in-depth diagnostic information, such as individual cell voltages, temperatures, and fault codes. This data can allow service technicians to perform thorough diagnostics and identify potential issues within the battery pack. The additional request may be a request for executing specific maintenance actions, such as balancing cell voltages, recalibrating sensors, or initiating self-tests. These commands enable maintenance personnel to perform necessary upkeep and ensure the battery pack operates efficiently. The additional request may be a request for uploading and installing new firmware versions to the battery management system. Firmware updates can enhance functionality, improve performance, and address security vulnerabilities within the battery pack. The additional request may be a request for historical data on the battery pack's performance, including past usage patterns, charge/discharge cycles, and previous faults. This information is valuable for analyzing long-term performance trends and planning preventive maintenance. The additional request may be a request for accessing or modifying configuration settings within the battery pack, such as charge limits, discharge rates, and temperature thresholds. These settings allow for customization and optimization of the battery pack's operation based on specific requirements.

With further reference to **FIG. 3****,** some exemplary battery data **30** is shown. Active Diagnostic Trouble Codes (DTCs) **30a** represent current fault codes that indicate specific issues or malfunctions within the battery pack **20.** These codes are used for diagnosing and addressing problems in real-time, ensuring prompt maintenance and repair. Regulatory data **30b** includes information required by legal and regulatory bodies, such as compliance with safety standards, environmental regulations, and reporting requirements. This data ensures that the battery pack meets necessary legal obligations and can be safely and legally operated. Battery status **30c** encompasses a range of operational metrics, such as the state of charge (SoC), state of health (SoH), temperature, and voltage levels of the battery pack. The battery status **30c** is used for assessing the overall health and performance of the battery, enabling users to make informed decisions about charging, discharging, and maintenance practices. Combined, these types of battery pack data **30** provide a comprehensive overview of the condition of the battery pack **20,** ensuring its safe, efficient, and compliant operation.

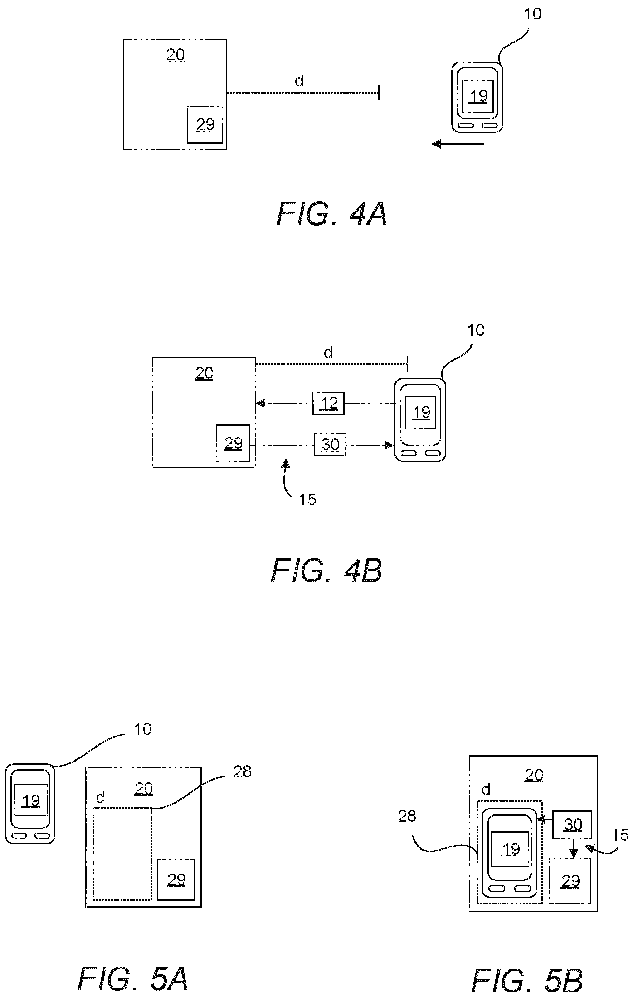

**FIGs. 4A-B**show an exemplary usage scenario enabled by teachings herein. In **FIG. 4A****,** the portable client device **10** is shown outside the identifiable distance **d** from the battery pack **20.** In this state, the portable client device **10** is being brought towards the battery pack **20** but remains outside the range required to initiate any communication or action. Since the portable client device **10** is still beyond the identifiable distance **d,** the system does not perform any authentication or data transmission processes, and no interaction occurs between the portable client device **10** and the battery pack **20** at this stage.

In contrast, **FIG. 4B** illustrates the scenario where the portable client device **10** has been brought within the identifiable distance **d** of the battery pack **20.** Upon entering this range, the system recognizes the proximity of the portable client device **10** and initiates the authentication process. The wireless communication units **19, 29** in both the battery pack **20** and the portable client device **10** establish bidirectional communication to authenticate the portable client device **10.** Once authenticated, the system obtains the privilege level **12** of the portable client device **10,** which dictates the specific data it is authorized to access. Following successful authentication and privilege level determination, the battery pack **20** transmits the relevant battery pack data **30** to the portable client device **10.** This data transfer is executed in accordance with the privilege level, ensuring that only the appropriate information is sent based on the authorization of the portable client device **10.**

**FIGs. 5A-B**show another exemplary usage scenario enabled by teachings herein. In **FIG. 5A****,** the portable client device **10** is depicted outside the identifiable distance **d** from the battery pack **20,** with the identifiable distance **d** being defined by a physical marker **28.** The physical marker **28** serves as a visual indication of the specific location where the portable client device **10** should be placed to initiate the communication and data transfer process. In this scenario, since the portable client device **10** is still outside the identifiable distance **d** marked by the physical marker **28,** no authentication or data transmission actions are triggered. The system remains inactive until the portable client device **10** is brought within the defined range.

In **FIG. 5B****,** the portable client device **10** has been positioned within the identifiable distance **d,** as indicated by the physical marker **28.** With the device now correctly placed, the system recognizes its proximity and begins the authentication process. The wireless communication units **19, 29** in both the battery pack **20** and the portable client device **10** establish bidirectional communication to verify the identity of the portable client device **10.** Upon successful authentication, the system determines the privilege level **12** of the portable client device **10,** which specifies the type and extent of data it is authorized to access. Following this determination, the battery pack **20** proceeds to transmit the appropriate battery pack data **30** to the portable client device **10.** This data transmission is conducted in accordance with the privilege level, ensuring that only the relevant information is sent based on the authorization of the portable client device **10.** The use of the physical marker **28** in these figures highlights an additional layer of user guidance, ensuring that the portable client device is positioned correctly to facilitate secure and efficient data access.

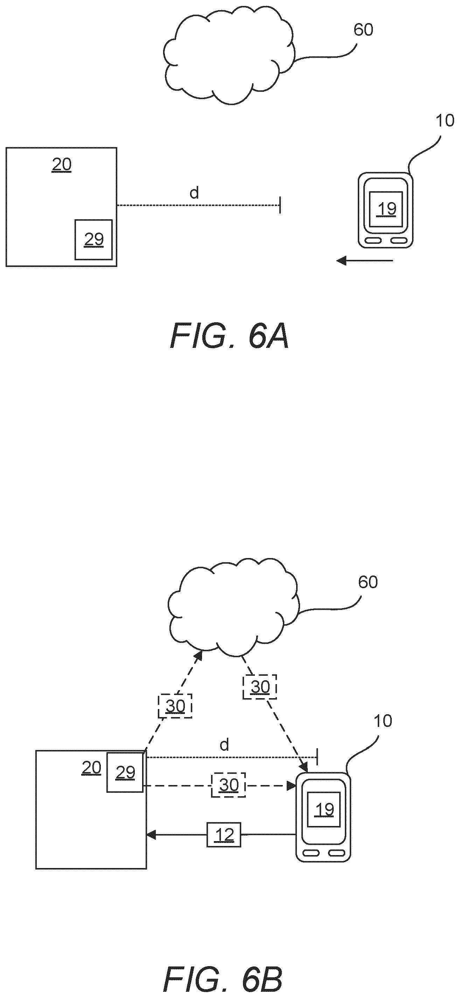

**FIGs. 6A-B**show another exemplary usage scenario enabled by teachings herein. What distinguishes **FIGs. 6A-B**from **FIGs. 4A-B**is the involvement of a cloud server **60** in the data transmission procedure. Once the privilege level **12** is obtained, the battery pack **20** may transmit the relevant battery pack data **30** directly to the portable client device **10** and/or via the cloud server **60.** The cloud server **60** then relays this data to the portable client device **10.** This method of data transmission can be useful in scenarios where direct communication between the battery pack **20** and the portable client device **10** is impractical or impossible, such as when the device **10** is authenticated within the distance **d,** but then travels outside of the distance where peer-to-peer communication is available, or when data needs to be accessed remotely. It may also enable centralized data storage and analysis, facilitating more advanced diagnostics, data logging, and remote monitoring capabilities. In this way, the cloud server **60** may enhance the flexibility and functionality of the system by providing an intermediary platform for secure and efficient data transmission.

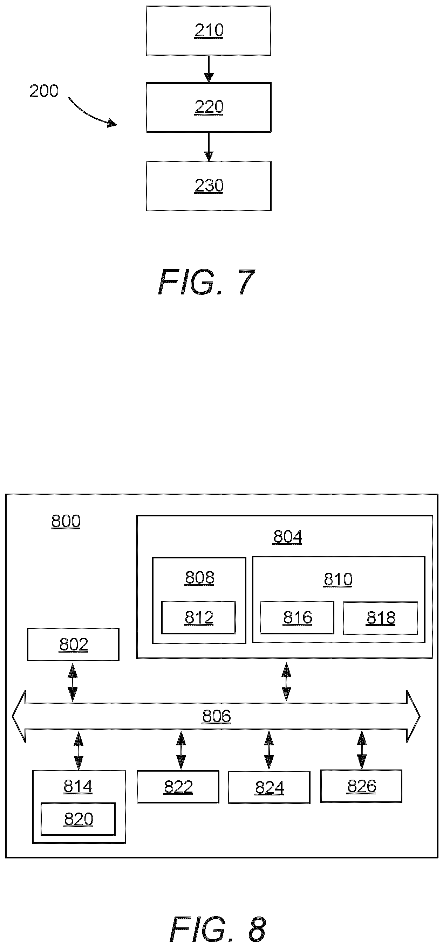

**FIG. 7** is an flowchart diagram of a computer-implemented method **200** for privilege-based battery pack data transmission. The method **200** is carried out by processing circuitry of a computer system. The method **200** comprises a step of authenticating **210** a portable client device in response to said portable client device **10** being within an identifiable distance of a battery pack. The method **200** comprises, based on the authentication, a step of obtaining **220** a privilege level of the portable client device, wherein the obtained privilege level indicates battery pack data allowed to be transmitted from the battery pack to the portable client device. The method **200** comprises a step of causing **230** wireless transmission of said battery pack data from the battery pack to the portable client device based on the obtained privilege level.

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below are some examples of this disclosure that can be envisaged.

Example 1: A computer system (100; 800) for privilege-based battery pack data transmission, the computer system (100; 800) comprising processing circuitry (102; 802) configured to authenticate a portable client device (10) in response to said portable client device (10) being within an identifiable distance (d) of a battery pack (20); based on the authentication, obtain a privilege level (12) of the portable client device (10), wherein the obtained privilege level (12) indicates battery pack data (30) allowed to be transmitted from the battery pack (20) to the portable client device (10); and cause wireless transmission of said battery pack data (30) from the battery pack (20) to the portable client device (10) based on the obtained privilege level (12).

Example 2: The computer system (100; 800) of Example 1, wherein the battery pack data (30) comprises one or more of an active diagnostic trouble code (30a), regulatory data (30b), and battery status (30c), wherein a higher privilege level (12) of the portable client device (10) is given access to more detailed information about the active diagnostic trouble codes (30a) and the battery statuses (30c), and a lower privilege level (12) of the portable client device (10) is given access to less detailed information about the active diagnostic trouble codes (30a) and the battery statuses (30c).

Example 3: The computer system (100; 800) of any of Examples 1-2, wherein the portable client device (10) is a handheld device configured to selectively be brought within the identifiable distance (d) to trigger the functionality of the processing circuitry (102; 802).

Example 4: The computer system (100; 800) of any of Examples 1-3, further comprising, in response to successfully authenticating the portable client device (10) and obtaining the privilege level (12), enabling transmission of additional battery pack data (30-n) from one or more additional battery packs (20-n) being associated with the battery pack (20).

Example 5: The computer system (100; 800) of any of Examples 1-4, wherein the battery pack (20) is arranged within a high-voltage, HV, component (40), the HV component (40) comprising the computer system (100; 800).

Example 6: The computer system (100; 800) of Example 5, wherein the HV component (40) further comprises a battery pack (20), the battery pack data (30) relating to said battery pack (20) of the HV component (40).

Example 7: The computer system (100; 800) of any of Examples 1-4, wherein the battery pack (20) is stored in a servicing location (110), the battery pack (20) comprising the computer system (100; 800).

Example 8: The computer system (100; 800) of any of Examples 1-7, wherein the computer system (100; 800) forms part of a battery management system, BMS (26), of the battery pack (20).

Example 9: The computer system (100; 800) of any of Examples 1-8, wherein the wireless transmission of said battery pack data (30) is effected between respective communication units (19, 29) of the portable client device (10) and the battery pack (20) using a wireless radio-frequency communication protocol (15).

Example 10: The computer system (100; 800) of any of Examples 1-9, wherein the portable client device (10) is further configured to transmit one or more additional requests to the battery pack (20) based on the obtained battery pack data (30) and its privilege level (12).

Example 11: The computer system (100; 800) of Example 10, said additional request being a request for one or more of detailed diagnostic data, maintenance commands, firmware updates, historical performance data, and battery pack configuration settings.

Example 12: The computer system (100; 800) of any of Examples 1-11, wherein the processing circuitry (102; 802) is configured to obtain the privilege level (12) based on application data associated with an identification application installed on the portable client device (10).

Example 13: The computer system (100; 800) of any of Examples 1-12, wherein the processing circuitry (102; 802) is configured to obtain the privilege level (12) based on a MAC address of the portable client device (10).

Example 14: The computer system (100; 800) of any of Examples 1-13, wherein the processing circuitry (102; 802) is configured to obtain the privilege level (12) based on an IP address or subnet from which the portable client device (10) is connecting, or a port number thereof.

Example 15: The computer system (100; 800) of any of Examples 1-14, wherein the processing circuitry (102; 802) is configured to obtain the privilege level (12) based on session-specific data of the authentication.

Example 16: The computer system (100; 800) of any of Examples 1-15, wherein the processing circuitry (102; 802) is configured to obtain the privilege level (12) based on a type of encryption or encoding protocol used for said authentication.

Example 17: The computer system (100; 800) of any of Examples 1-16, wherein the processing circuitry (102; 802) is configured to obtain the privilege level (12) based on a physical layer attribute of the portable client device (10).

Example 18: A use of a portable client device (10) to obtain battery pack data (30) from a battery pack (20), comprising bringing the portable client device (10) within an identifiable distance (d) of the battery pack (20), thereby causing authentication of the portable client device (10) against the battery pack (20), and the battery pack (20) to obtain a privilege level (12) of the portable client device (10), wherein the privilege level (12) indicates battery pack data (30) allowed to be transmitted from the battery pack (20) to the portable client device (10); and based on the obtained privilege level (12), causing the portable client device (10) to wirelessly obtain battery pack data (30) from the battery pack (20).

Example 19: The use of Example 18, wherein the battery pack (20) comprises a physical marker (28), the portable client device (10) being brought within the identifiable distance (d) by placing it on the physical marker (28).

Example 20: A vehicle (1) comprising the computer system (100; 800) of any of Examples 1-17.

Example 21: A computer-implemented method (200) for privilege-based battery pack data transmission, comprising authenticating (210), by processing circuitry (102; 802) of a computer system (100; 800), a portable client device (10) in response to said portable client device (10) being within an identifiable distance (d) of a battery pack (20); based on the authentication, obtaining (220), by the processing circuitry (102; 802), a privilege level (12) of the portable client device (10), wherein the obtained privilege level (12) indicates battery pack data (30) allowed to be transmitted from the battery pack (20) to the portable client device (10); and causing (230), by the processing circuitry (102; 802), wireless transmission of said battery pack data (30) from the battery pack (20) to the portable client device (10) based on the obtained privilege level (12).

Example 22: A computer program product comprising program code for performing, when executed by the processing circuitry (102; 802), the method (200) of Example 21.

Example 23: A non-transitory computer-readable storage medium comprising instructions, which when executed by the processing circuitry (102; 802), cause the processing circuitry (102; 802) to perform the method (200) of Example 21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 800) for privilege-based battery pack data transmission , the computer system (100; 800) comprising processing circuitry (102; 802) configured to:
authenticate a portable client device (10) in response to said portable client device (10) being within an identifiable distance (d) of a battery pack (20);
based on the authentication, obtain a privilege level (12) of the portable client device (10), wherein the obtained privilege level (12) indicates battery pack data (30) allowed to be transmitted from the battery pack (20) to the portable client device (10); and
cause wireless transmission of said battery pack data (30) from the battery pack (20) to the portable client device (10) based on the obtained privilege level (12).

2. The computer system (100; 800) of claim 1, wherein the battery pack data (30) comprises one or more of an active diagnostic trouble code (30a), regulatory data (30b), and battery status (30c), wherein:
a higher privilege level (12) of the portable client device (10) is given access to more detailed information about the active diagnostic trouble codes (30a) and the battery statuses (30c), and
a lower privilege level (12) of the portable client device (10) is given access to less detailed information about the active diagnostic trouble codes (30a) and the battery statuses (30c).

3. The computer system (100; 800) of any of claims 1-2, wherein the portable client device (10) is a handheld device configured to selectively be brought within the identifiable distance (d) to trigger the functionality of the processing circuitry (102; 802).

4. The computer system (100; 800) of any of claims 1-3, further comprising, in response to successfully authenticating the portable client device (10) and obtaining the privilege level (12), enabling transmission of additional battery pack data (30-n) from one or more additional battery packs (20-n) being associated with the battery pack (20).

5. The computer system (100; 800) of any of claims 1-4, wherein the battery pack (20) is arranged within a high-voltage, HV, component (40), the HV component (40) comprising the computer system (100; 800) and a battery pack (20), the battery pack data (30) relating to said battery pack (20) of the HV component (40).

6. The computer system (100; 800) of any of claims 1-5, wherein the battery pack (20) is stored in a servicing location (110), the battery pack (20) comprising the computer system (100; 800).

7. The computer system (100; 800) of any of claims 1-6, wherein the computer system (100; 800) forms part of a battery management system, BMS (26), of the battery pack (20).

8. The computer system (100; 800) of any of claims 1-7, wherein the portable client device (10) is further configured to transmit one or more additional requests to the battery pack (20) based on the obtained battery pack data (30) and its privilege level (12), said additional request being a request for one or more of detailed diagnostic data, maintenance commands, firmware updates, historical performance data, and battery pack configuration settings.

9. The computer system (100; 800) of any of claims 1-8, wherein the processing circuitry (102; 802) is configured to obtain the privilege level (12) based on session-specific data of the authentication.

10. A use of a portable client device (10) to obtain battery pack data (30) from a battery pack (20), comprising:
bringing the portable client device (10) within an identifiable distance (d) of the battery pack (20), thereby causing authentication of the portable client device (10) against the battery pack (20), and the battery pack (20) to obtain a privilege level (12) of the portable client device (10), wherein the privilege level (12) indicates battery pack data (30) allowed to be transmitted from the battery pack (20) to the portable client device (10); and
based on the obtained privilege level (12), causing the portable client device (10) to wirelessly obtain battery pack data (30) from the battery pack (20).

11. The use of claim 10, wherein the battery pack (20) comprises a physical marker (28), the portable client device (10) being brought within the identifiable distance (d) by placing it on the physical marker (28).

12. A vehicle (1) comprising the computer system (100; 800) of any of claims 1-9.

13. A computer-implemented method (200) for privilege-based battery pack data transmission, comprising:
authenticating (210), by processing circuitry (102; 802) of a computer system (100; 800), a portable client device (10) in response to said portable client device (10) being within an identifiable distance (d) of a battery pack (20);
based on the authentication, obtaining (220), by the processing circuitry (102; 802), a privilege level (12) of the portable client device (10), wherein the obtained privilege level (12) indicates battery pack data (30) allowed to be transmitted from the battery pack (20) to the portable client device (10); and
causing (230), by the processing circuitry (102; 802), wireless transmission of said battery pack data (30) from the battery pack (20) to the portable client device (10) based on the obtained privilege level (12).

14. A computer program product comprising program code for performing, when executed by the processing circuitry (102; 802), the method (200) of claim 13.

15. A non-transitory computer-readable storage medium comprising instructions, which when executed by the processing circuitry (102; 802), cause the processing circuitry (102; 802) to perform the method (200) of claim 13.

## Amended claims

### Amended claims in accordance with Rule 137(2) EPC.

1. A computer system (100; 800) for privilege-based battery pack data transmission , the computer system (100; 800) comprising processing circuitry (102; 802) configured to:
authenticate a portable client device (10) in response to said portable client device (10) being within an identifiable distance (d) of a battery pack (20);
based on the authentication, obtain a privilege level (12) of the portable client device (10), wherein the obtained privilege level (12) indicates battery pack data (30) allowed to be transmitted from the battery pack (20) to the portable client device (10); and
cause wireless transmission of said battery pack data (30) from the battery pack (20) to the portable client device (10) based on the obtained privilege level (12),
**characterized in that** the processing circuitry (102; 802) is further configured to, in response to successfully authenticating the portable client device (10) and obtaining the privilege level (12), enabling transmission of additional battery pack data (30-n) to the portable client device (10) from one or more additional battery packs (20-n) being associated with the battery pack (20).

2. The computer system (100; 800) of claim 1, wherein the battery pack data (30) comprises one or more of an active diagnostic trouble code (30a), regulatory data (30b), and battery status (30c), wherein:
a higher privilege level (12) of the portable client device (10) is given access to more detailed information about the active diagnostic trouble codes (30a) and the battery statuses (30c), and
a lower privilege level (12) of the portable client device (10) is given access to less detailed information about the active diagnostic trouble codes (30a) and the battery statuses (30c).

3. The computer system (100; 800) of any of claims 1-2, wherein the portable client device (10) is a handheld device configured to selectively be brought within the identifiable distance (d) to trigger the functionality of the processing circuitry (102; 802).

4. The computer system (100; 800) of any of claims 1-3, wherein the battery pack (20) is arranged within a high-voltage, HV, component (40), the HV component (40) comprising the computer system (100; 800) and a battery pack (20), the battery pack data (30) relating to said battery pack (20) of the HV component (40).

5. The computer system (100; 800) of any of claims 1-4, wherein the battery pack (20) is stored in a servicing location (110), the battery pack (20) comprising the computer system (100; 800).

6. The computer system (100; 800) of any of claims 1-5, wherein the computer system (100; 800) forms part of a battery management system, BMS (26), of the battery pack (20).

7. The computer system (100; 800) of any of claims 1-6, wherein the portable client device (10) is further configured to transmit one or more additional requests to the battery pack (20) based on the obtained battery pack data (30) and its privilege level (12), said additional request being a request for one or more of detailed diagnostic data, maintenance commands, firmware updates, historical performance data, and battery pack configuration settings.

8. The computer system (100; 800) of any of claims 1-7, wherein the processing circuitry (102; 802) is configured to obtain the privilege level (12) based on session-specific data of the authentication.

9. The computer system (100; 800) of any of claims 1-8, wherein the processing circuitry (102; 802) is configured to obtain the privilege level (12) based on one or more of:
application data associated with an identification application installed on the portable client device (10);
a MAC address of the portable client device (10)
an IP address or subnet from which the portable client device (10) is connecting, or a port number thereof;
session-specific data of the authentication;
a type of encryption or encoding protocol used for said authentication; and
a physical layer attribute of the portable client device (10).

10. A use of a portable client device (10) to obtain battery pack data (30) from a battery pack (20), comprising:
bringing the portable client device (10) within an identifiable distance (d) of the battery pack (20),
authenticating, by processing circuitry (102; 802) of a computer system (100; 800) associated with the battery pack (20), the portable client device (10);
obtaining, by the processing circuitry (102; 802) and based on the authentication, a privilege level (12) of the portable client device (10), wherein the privilege level (12) indicates battery pack data (30) allowed to be transmitted from the battery pack (20) to the portable client device (10);
wirelessly obtaining, by the portable client device (10), said battery pack data (30) from the battery pack (20) based on the obtained privilege level (12); and
in response to successfully authenticating the portable client device (10) and obtaining the privilege level (12), enabling, by the processing circuitry (102; 802) transmission of additional battery pack data (30-n) to the portable client device (10) from one or more additional battery packs (20-n) being associated with the battery pack (20).

11. The use of claim 10, wherein the battery pack (20) comprises a physical marker (28), the portable client device (10) being brought within the identifiable distance (d) by placing it on the physical marker (28).

12. A vehicle (1) comprising the computer system (100; 800) of any of claims 1-9.

13. A computer-implemented method (200) for privilege-based battery pack data transmission, comprising:
authenticating (210), by processing circuitry (102; 802) of a computer system (100; 800), a portable client device (10) in response to said portable client device (10) being within an identifiable distance (d) of a battery pack (20);
based on the authentication, obtaining (220), by the processing circuitry (102; 802), a privilege level (12) of the portable client device (10), wherein the obtained privilege level (12) indicates battery pack data (30) allowed to be transmitted from the battery pack (20) to the portable client device (10); and
causing (230), by the processing circuitry (102; 802), wireless transmission of said battery pack data (30) from the battery pack (20) to the portable client device (10) based on the obtained privilege level (12),
**characterized in that** the method (200) further in response to successfully authenticating the portable client device (10) and obtaining the privilege level (12), enabling transmission of additional battery pack data (30-n) to the portable client device (10) from one or more additional battery packs (20-n) being associated with the battery pack (20).

14. A computer program product comprising program code for performing, when executed by the processing circuitry (102; 802), the method (200) of claim 13.

15. A non-transitory computer-readable storage medium comprising instructions, which when executed by the processing circuitry (102; 802), cause the processing circuitry (102; 802) to perform the method (200) of claim 13.
